# EUROPEAN PATENT APPLICATION

(11) **EP 4 489 406 A1**
(43) Date of publication of application: **08.01.2025**
(21) Application number: 23183082.9
(22) Date of filing: 03.07.2023
(51) Int. Cl.: H04N 21/414, H04J 3/06, H04N 21/43, H04N 21/4363

(54) **VIDEO ARCHITECTURE OVER ETHERNET**

(71) Applicant: Bayerische Motoren Werke Aktiengesellschaft, 80809 München (DE)
(72) Inventor: Schmieder, Bernd, 81479 München (DE)

(57) **Abstract**

Given an architecture for transmitting video content within a vehicle, it is an objective of the present invention to reduce overhead and reduce production costs and reduce power consumption. The objective is solved by a host device (205) configured to package stored display content data in a frame buffer each pixel of a display panel mapped to a unique integer in the frame buffer, and send the data over Ethernet network (225) to a display device (215); and the display device is configured to arrange the display content data in a display frame buffer (420), and display the display content data on a panel (250).

## Description

### Technical field

The invention relates to a video transmission architecture over a vehicle local network and a method for the same.

### Background

Video transmission from host device to display device in a vehicle suffers drawbacks. The frame buffer generated by the GPU in the host, is traditionally first converted to e.g. HDMI signal, transmitted via bridges over cable, such as Coax, STP or QSTP, to the display, where the frame buffer is reconstructed. Traditional means involves high overhead, since video timings and blanking are transmitted between the host and display. Video transmission using traditional means between a host device and a display device therefore has high overhead and requires several bridges, adding to production costs. Ethernet bandwidth in vehicles is increasing allowing the video chain to be re-analyzed.

Ethernet Standard IEEE 1722 supports raw and compressed audio/video as OSI layer 2 protocol, but this is only suitable between a camera source and a host device.

### Summary

The deficiency is solved by a video transmission architecture for a vehicle, such as a car, comprising: a host device; a display device; and a network, in particular an Ethernet network, connecting the host device and the display device; the host device comprising a graphics processing unit (GPU), and a host frame buffer; the display device comprising a display frame buffer and a display panel; wherein the host device is configured to generate, by the GPU, display content data for displaying on the panel, and storing the generated display content data in the host frame buffer, each pixel of the display panel mapped to a unique integer in the host frame buffer; characterized by the host device further configured to send the display content data stored in the host frame buffer over the Ethernet network to the display device; and wherein the display device is configured to receive the display content data from the Ethernet network, arrange the display content data in the display frame buffer, and display the display content data on the panel.

Advantages include lower bandwidth overhead and lower components costs and lower power consumption.

In one example, the host device is configured to send the display content data as raw display content data.

In one example, the host device further comprises a Display Stream Compression, DSC encoder or comparable configured to compress the display content data before transmission; and wherein the display device comprises a DSC decoder or comparable configured to decompress the received display content data into raw display content data.

In one example, blanking and/or video timings are not generated by the host device. Neither the host device nor the display device may comprise a bridge device.

In one example, the host device is further configured to calculate a host checksum over the whole display content data in the host frame buffer; wherein the display device is further configured to calculate a display checksum over the whole display content data in the display frame buffer, and send the display checksum, over the Ethernet network, to the host device; and wherein the host device is further configured to compare the received display checksum with the host checksum, and resend the whole display content data if the comparison do not match.

In one example, the display device is further configured to send sync events, over the Ethernet network, to the host device, and wherein the host device is further configured to adjust the sending of the display content data according to the timing of the received sync events.

In one example, the display device further comprises a second display frame buffer; and wherein the display device is further configured, during readout of data from the display frame buffer to the panel, the second display frame buffer is filled with received display content data, and vice versa.

In one example, the display content data in the host frame buffer is sliced into segments, each segment corresponding to a continuous area of display on the panel; and wherein the host device is further configured to determine if a segment data has been altered vis-à-vis a last transmission to the display device, and send the segment as display content data, only if the segment data has been altered.

In one example, the host device and/or the display device further comprises a High-bandwidth Digital Content Protection, HDCP, Cipher.

The deficiency is solved by a method for video transmission in a vehicle, such as a car, over a vehicle local network, such as an Ethernet network, the method comprising: generate, by a GPU of a host device, display content data for displaying on a display panel of a display device; storing, by the host device, the generated display content data in a host frame buffer of the host device, each pixel of the display panel mapped to a unique integer in the host frame buffer; sending, by the host device, the display content data stored in the host frame buffer over the network to the display device; receiving, by the display device, the display content data from the network; arranging, by the display device, the display content data in a display frame buffer of the display device; and displaying, by the display device, the display content data on the panel.

In one example, the method, further comprises: sending, by the host device, the display content data as raw display content data.

In one example, the method, further comprises: compressing, by a Display Stream Compression, DSC encoder or comparable of the host device, the display content data before sending; and decompressing, by a DSC decoder or comparable of the display device, the received display content data into raw display content data.

In one example, the method, further comprises: calculating, by the host device, a host checksum over a whole display content data in the host frame buffer; calculating, by the display device, a display checksum over a whole display content data in the display frame buffer; sending, by the display device, the display checksum, over the network, to the host device; comparing, by the host device, the received display checksum with the calculated host checksum; and resending, by the host device, the whole display content data if the comparison do not match.

In one example, the method, further comprises: sending, by the display device, sync events, over the network, to the host device; and adjusting, by the host device, the timing of the sending of the display content data according to the timing of the received sync events.

In one example, the method, further comprises: storing, by the display device, received display content data in a second display frame buffer of the display device, during readout of data from the display frame buffer to the panel; and storing, by the display device, received display content data in a display frame buffer, during readout of data from the second display frame buffer to the panel.

### Detailed description of drawings

Fig. 1 depicts a traditional video transmission architecture.
Fig. 2 depicts a video transmission architecture according to the invention
Fig. 3 depicts a host device according to the invention
Fig. 4 depicts a display device according to the invention

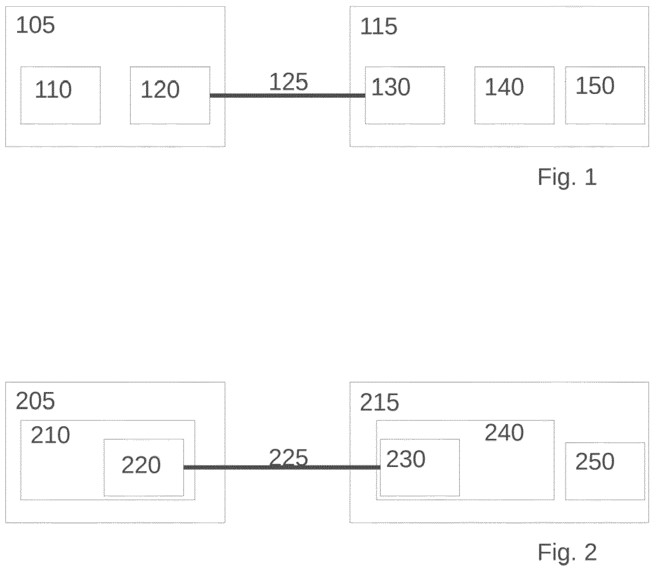

Fig. 1 depicts a traditional video transmission architecture comprising a host device 105 and a display device 115. The video generated by the System on Chip (SoC) 110 of the host device 105 is sent to the display device over STP, QSTP or Coax (125) via a first bridge 130. A second bridge (130) is configured in the display device (115) to receive the video content and transform it for display on the panel 150, by the Graphics Display Controller (GDC).

Fig. 2 depicts a video transmission architecture according to the invention comprising a host device 205, further comprising a SoC 210 (including RGB to Ethernet packaging) and an Ethernet IEEE Physical Layer Device (PHY) 220. The architecture further comprises a Ethernet transmission means, such as STP/GOF (Shielded twisted pair/Glass optical fiber) 225.

The architecture further comprises a display device 215 comprising Ethernet IEEE PHY unit 230 for receiving video content over Ethernet 225 and GDC 240 for displaying received RGB data on a panel 250.

The invention proposes an architecture for transmitting video data from host device to display device over Ethernet as OSI layer 2 data. When raw framebuffer data is sent, video signal processing on host and display device is not needed, saving resources. The frame buffer data may be sent as raw, i.e. unaltered and uncompressed bit stream.

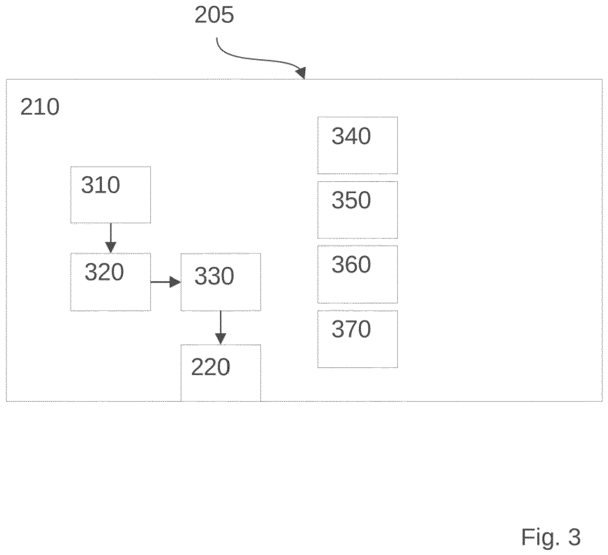

Fig. 3 depicts 502 a host device according to the invention, further comprising Graphics processing unit, GPU 310, Host frame buffer 320 and means for packaging RGB/Video as Ethernet layer 2 package 330. The host device 205 may optionally also comprise means for Variable Refresh Rate control 340, for Checksum generation, verification, and reaction 350, for Optional Display Stream Compression, DSC encoder or comparable 360, and for High-bandwidth Digital Content Protection (HDCP) Cipher 370.

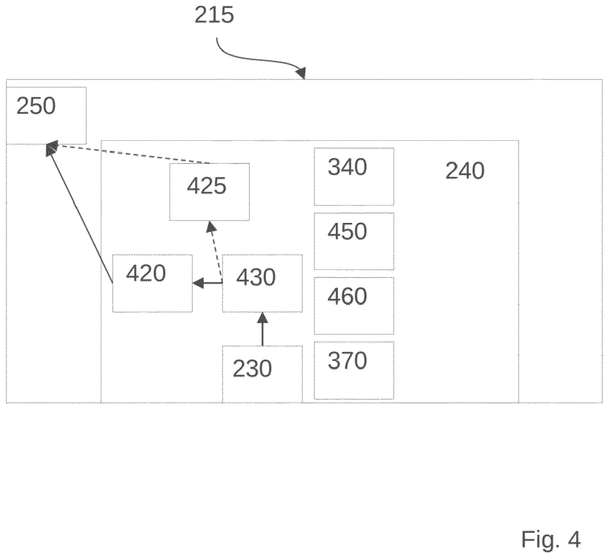

Fig. 4 depicts a display device 215 according to the invention further comprising a display frame buffer 420 and means for unpacking Ethernet layer 2 data into RGB/Video content data 430. The display device 215 may further comprise a Second display frame buffer 425. The display device 215 may optionally also comprise means for Variable Refresh Rate control 340, for checksum generation and sending 450, for DSC decoding or comparable 430, and for HDCP Cipher 370.

Reference numerals
- 105: Traditional host
- 110: System on Chip (SoC)
- 115: Traditional display
- 120: Bridge
- 125: STP/QSTP/Coax
- 130: Bridge
- 140: Graphics Display Controller, GDC
- 150: Panel
- 205: Host (Head) unit
- 210: SoC (including RGB to Ethernet)
- 215: Display
- 220: Ethernet IEEE Physical Layer Device (PHY)
- 225: STP/GOF (Shielded twisted pair/Glass optical fiber)
- 230: Ethernet IEEE PHY
- 240: GDC (including Ethernet to RGB)
- 250: Panel
- 305: Central processing unit, CPU
- 310: Graphics processing unit, GPU
- 320: Host frame buffer
- 330: RGB/Video to Ethernet layer 2 package
- 340: Optional Variable Refresh Rate control
- 350: Optional Checksum generation, verification, and reaction
- 360: Optional Display Stream Compression, DSC encoder or comparable
- 370: Optional High-bandwidth Digital Content Protection (HDCP) Cipher
- 420: Display frame buffer
- 425: Second display frame buffer
- 430: Ethernet layer 2 package to RGB/Video
- 450: Optional Checksum generation and sending
- 460: Optional Display Stream Compression, DSC decoder or comparable

## Claims

1. A video transmission architecture for a vehicle, such as a car, comprising:
a host device (205);
a display device (215); and
a network, in particular an Ethernet network (225), connecting the host device (205) and the display device (215);
the host device (205) comprising a graphics processing unit (310), namely a GPU, and a host frame buffer (320);
the display device (215) comprising a display frame buffer (420) and a display panel (250);
wherein the host device (205) is configured to generate, by the GPU (310), display content data for displaying on the panel (250), and storing the generated display content data in the host frame buffer (320), each pixel of the display panel mapped to a unique integer in the host frame buffer;
**characterized by**
the host device (205) further configured to send the display content data stored in the host frame buffer over the network (225) to the display device (215); and
wherein the display device (215) is configured to receive the display content data from the network (225), arrange the display content data in the display frame buffer (420), and display the display content data on the panel (250).

2. The architecture of claim 1,
wherein the host device is configured to send the display content data as raw display content data.

3. The architecture of claim 1,
wherein the host device further comprises a Display Stream Compression, DSC encoder or comparable (360) configured to compress the display content data before transmission; and
wherein the display device comprises a DSC decoder or comparable (460) configured to decompress the received display content data into raw display content data.

4. The architecture of any of the previous claims,
wherein blanking and/or video timings are not generated by the host device
and/or
wherein neither the host device nor the display device comprise a bridge device.

5. The architecture of any of the previous claims,
wherein the host device is further configured to calculate a host checksum over the whole display content data in the host frame buffer (320);
wherein the display device is further configured to calculate a display checksum over the whole display content data in the display frame buffer (420), and send the display checksum, over the network, to the host device;
and wherein the host device is further configured to compare the received display checksum with the host checksum, and resend the whole display content data if the comparison do not match.

6. The architecture of any of the previous claims,
wherein the display device is further configured to send sync events, over the network, to the host device, and
wherein the host device is further configured to adjust the timing of the sending of the display content data according to the timing of the received sync events.

7. The architecture of claim 6,
wherein the display device further comprises a second display frame buffer (425); and wherein the display device is further configured, during readout of data from the display frame buffer (420) to the panel (250), the second display frame buffer (425) is filled with received display content data, and vice versa.

8. The architecture of any of the previous claims,
wherein the display content data in the host frame buffer (320) is sliced into segments, each segment corresponding to a continuous area of display on the panel; and
wherein the host device is further configured to determine if a segment data has been altered vis-à-vis a last transmission to the display device, and send the segment as display content data, only if the segment data has been altered.

9. The architecture of any of the previous claims,
wherein the host device and/or the display device further comprises a High-bandwidth Digital Content Protection, HDCP, Cipher (370).

10. A method for video transmission in a vehicle, such as a car, over a vehicle local network, such as an Ethernet network (225),
the method comprising:
generate, by a GPU (310) of a host device (205), display content data for displaying on a display panel (250) of a display device (215); and
storing, by the host device (205), the generated display content data in a host frame buffer (320) of the host device (205), each pixel of the display panel (250) mapped to a unique integer in the host frame buffer (320);
**characterized by**
sending, by the host device (205), the display content data stored in the host frame buffer over the network (225) to the display device (215);
receiving, by the display device (215), the display content data from the network (225);
arranging, by the display device (215), the display content data in a display frame buffer (420) of the display device (215); and
displaying, by the display device (215), the display content data on the panel (250).

11. The method of claim 10, further comprising:
sending, by the host device, the display content data as raw display content data.

12. The method of claim 10, further comprising
compressing, by a Display Stream Compression, DSC encoder or comparable (360) of the host device, the display content data before sending; and decompressing, by a DSC decoder or comparable (460) of the display device, the received display content data into raw display content data.

13. The method of any of the claims 10 to 12, further comprising:
calculating, by the host device, a host checksum over a whole display content data in the host frame buffer (320);
calculating, by the display device, a display checksum over a whole display content data in the display frame buffer (420);
sending, by the display device, the display checksum, over the network, to the host device;
comparing, by the host device, the received display checksum with the calculated host checksum; and
resending, by the host device, the whole display content data if the comparison do not match.

14. The method of any of the claims 10 to 13, further comprising:
sending, by the display device, sync events, over the network, to the host device; and
adjusting, by the host device, the timing of the sending of the display content data according to the timing of the received sync events.

15. The method of claim 14, further comprising:
storing, by the display device, received display content data in a second display frame buffer (425) of the display device, during readout of data from the display frame buffer (420) to the panel (250); and
storing, by the display device, received display content data in a display frame buffer (420), during readout of data from the second display frame buffer (425) to the panel (250).
